# EUROPEAN PATENT APPLICATION

(11) **EP 3 521 990 A1**
(43) Date of publication of application: **07.08.2019**
(21) Application number: 18305115.0
(22) Date of filing: 05.02.2018
(51) Int. Cl.: G06F 3/0488, G06F 3/0482, G06F 3/0481, G06F 3/0484

(54) **METHOD FOR INTERACTING WITH ONE OR MORE OF SOFTWARE APPLICATIONS USING A TOUCH SENSITIVE DISPLAY**

(71) Applicant: Alkymia, 78200 Buchelay (FR)
(72) Inventor: MIANCE, Marc, 13100 Le Tholonet (FR); MIANCE, Isabelle, 13100 Le Tholonet (FR)
(74) Representative: Novagraaf Technologies

(57) **Abstract**

A method for interacting with one or more software applications (S1, S2, S3) using a touch sensitive display. The method comprises: displaying (420), upon detection of a contact at a contact point of the touch sensitive display, a common UI screen for interacting with the plurality of software applications (SI, S2, S3), wherein the common screen comprises in foreground plane a first plurality of icons (1, 2, 3, 4) of a set of icons, wherein the icons of first plurality of icons (1, 2, 3, 4) are positioned around a location of the contact point at the time of the detection of the contact; detecting (430) a displacement of the contact point without interruption of said contact with the touch sensitive display, wherein said displacement is performed along a trajectory (G); detecting (440), during said displacement, a temporal succession of intersections of the trajectory (G) with a display area of one or more icons displayed in the foreground plane and triggering one or more first operations of a first software application associated with a currently intersected icon (1).

## Description

### TECHNICAL FIELD

The disclosure generally relates to the field of telecommunication and digital data processing and more specifically to a method for interacting with one or more software applications using a touch sensitive display.

### BACKGROUND

US Patent Application published under number US2017/0214640A1 discloses a method for sharing media contents between several users. The method includes the generation of one or more contribution media contents which are combined with a topic media content to generate an annotated media content. The annotated media content is then intended to be shared between users.

The steps of generating the contribution media contents and combining the contribution media contents with topic media content may be implemented by using a dedicated software application or integrated into an existing software application, for example as a plug-in or add-on. The topic media content itself may be generated by another software application, downloaded from the web, resulting from a screen shot of a user interface of another software application or generated inside the same software application. Thus there may be multiple sources for the topic media content.

Furthermore, any kind of contribution media contents may be used for annotating the topic media content, for example typed text, audio, video, images, graphical elements or any combination thereof. Thus several software tools may be necessary for generating several types of contribution media contents.

One purpose of the method disclosed in US Patent Application US2017/0214640A1 is to facilitate the sharing of any kind of media contents, in any mobility situation, using any kind of portable electronic devices, for example mobile phones. However such small portable devices have reduced display screen and reduced possible means for interacting with software applications, which are generally and essentially reduced to a touch sensitive display.

More generally, the problem of the implementation of an interaction with one or more software applications exists also for the implementation of an operating system on small portable devices with touch sensitive display or each time a user has to perform with a touch sensitive display a succession of operations implying an interaction with several software applications with such a portable device.

Further, in the context of mobility situations, a user may need to implement such an interaction with one or more software applications using only one hand.

Thus there appears a need for a user friendly, efficient and simple solution to interact in mobility situation with one or more software applications using only a touch sensitive display that would be suitable for operating systems as well as for implementing any succession of operations implying an interaction with several software applications.

### SUMMARY

In general, according to a first one aspect, the present disclosure relates to a method for interacting with one or more software applications using a touch sensitive display. The method comprises displaying, upon detection of a contact at a contact point of the touch sensitive display, a common UI screen for interacting with said one or more software applications, wherein the common screen comprises in foreground plane a first plurality of icons of a set of icons, wherein each icon of the set of icons is associated with a software application of said one or more software applications, wherein the icons of first plurality of icons are positioned around a location of the contact point at the time of the detection of the contact; detecting a displacement of the contact point without interruption of said contact with the touch sensitive display, wherein said displacement is performed along a trajectory; detecting, during said displacement, a temporal succession of intersections of the trajectory with a display area of one or more icons displayed in the foreground plane; for each intersection that is associated with one or more first operations of a first software application associated with a currently intersected icon, triggering upon detection of the considered intersection an execution by said first software application of said one or more first operations and providing feedback on the execution of the one or more first operations in a first UI window of the first software application in one or more background planes of the common UI screen.

According to a second aspect, the present disclosure relates to an electronic device including a touch sensitive display, a processor, a memory operatively coupled to the processor, said memory comprising computer readable instructions which, when executed by the processor, cause the processor to carry out the steps of the method according to the first aspect.

According to a third aspect, the present disclosure relates to a computer program product comprising computer readable instructions which, when executed by a computer, cause the computer to carry out the steps of the method according to the first aspect.

### BRIEF DESCRIPTION OF THE DRAWINGS

The present disclosure will be better understood and its numerous aspects and advantages will become more apparent to those skilled in the art by reference to the following drawings, in conjunction with the accompanying specification, in which:
- FIG. 1 is a block diagram illustrating a portable electronic device in accordance with one or more embodiments;
- FIGS. 2A-2B illustrate some aspects of user interface (UI) screens for interacting with software applications in accordance with one or more embodiments;
- FIGS. 3A-3B illustrate further aspects of user interface (UI) screens for interacting with software applications in accordance with one or more embodiments;
- FIGS. 4A-4N show UI screens for interacting with software applications in accordance with one or more embodiments;
- FIG. 5 shows a flow chart of a method for interacting with one or more software applications in accordance with one or more embodiments;
- FIGS. 6A-6N show UI screens for interacting with software applications in accordance with one or more embodiments.

### DETAILED DESCRIPTION OF EMBODIMENTS

The present disclosure relates to an electronic device and a method for interacting with one or more software applications. Different embodiments are disclosed herein. The method for interacting with one or more software applications may be applicable to a sharing of media content between users as described in US2017/214640A1. The method for interacting with one or more software applications is further applicable for implementing an operating system interacting with one or more software applications. The method for interacting with one or more software applications is more generally applicable for implementing any succession of operations implying interaction with several software applications.

The other advantages, and other features of the components disclosed herein, will become more readily apparent to those having ordinary skill in the art. The following detailed description of certain preferred embodiments, taken in conjunction with the drawings, sets forth representative embodiments of the subject technology, wherein like reference numerals identify similar structural elements.

In addition, it should be apparent that the teaching herein can be embodied in a wide variety of forms and that any specific structure and/or function disclosed herein is merely representative. In particular, one skilled in the art will appreciate that an embodiment disclosed herein can be implemented independently of any other embodiment and that several embodiments can be combined in various ways and that one or several aspects of different embodiments can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. Specifically, software instructions or computer readable program code to perform embodiments described herein may be stored, temporarily or permanently, in whole or in part, on a non-transitory computer readable medium of a local or remote storage device including one or more storage media.

As used herein, a computer storage medium may be any physical media that can be read, written or more generally accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, solid state memory, memory chip, RAM, ROM, EEPROM, smart cards, a relational database management system (RDBMS), a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

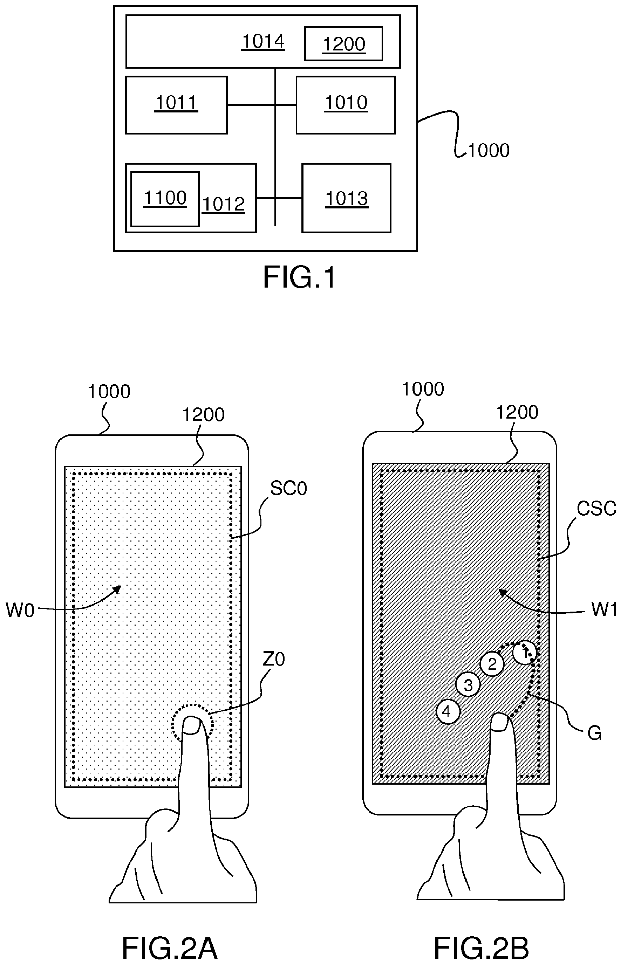

Referring to FIG. 1, the electronic device (1000) may be implemented as a single hardware device, for example in the form of a desktop personal computer (PC), a laptop, a personal digital assistant (PDA), a smartphone or may be implemented on separate interconnected hardware devices connected one to each other by a communication link, with wired and/or wireless segments.

The electronic device (1000) generally operates under the control of an operating system and executes or otherwise relies upon various computer software applications, components, programs, objects, modules, data structures, etc.

In one or more embodiments, the electronic device (1000) comprises a processor (1010), at least one memory (1011), one or more computer storage media (1012), and other associated hardware such as input/output interfaces (e.g. device interfaces such as USB interfaces, etc., network interfaces such as Ethernet interfaces, etc.) and a media drive 1013 for reading and writing the one or more computer storage media (1012).

The memory (1011) of the electronic device (1000) may be a random access memory (RAM), cache memory, non-volatile memory, backup memory (e.g., programmable or flash memories), read-only memories, or any combination thereof. The processor (1010) of the electronic device (1000) may be any suitable microprocessor, integrated circuit, or central processor (CPU) including at least one hardware-based processor or processing core.

In one or more embodiments, the computer storage medium or media (1012) of the electronic device (1000) may contain computer program instructions which, when executed by the processor (1010), cause the electronic device (1000) to perform one or more method described herein. The processor (1010) of an electronic device (1000) may be configured to access to said one or more computer storage media (1012) for storing, reading and/or loading computer program instructions or software code that, when executed by a processor, causes the processor to perform the steps of a method described herein.

The processor (1010) of an electronic device (1000) may further be configured to use the memory (1011) of an electronic device (1000) when executing the steps of a method described herein for an electronic device (1000), for example for loading computer program instructions and for storing data generated during the execution of the computer program instructions.

The electronic device (1000) also generally receives a number of inputs and outputs for communicating information externally. For interface with a user 1001 or operator, an electronic device (1000) generally includes a user interface 1014 incorporating one or more user input/output devices, e.g., a keyboard, a pointing device, a display, a printer, etc. Otherwise, user input may be received, e.g., over a network interface, from one or more external computers, another electronic device (1000).

In one or more embodiments, the electronic device (1000) executes computer program instructions of a software application (1100) (also referred to as "main application (1100)") that, when executed by the processor of the electronic device, causes the processor to perform the method steps described herein.

In one or more embodiments, the electronic device (1000) includes a touch sensitive display (1200). Touch-sensitive displays (also known as "touch screens" or "touchscreens") are well known in the art. Touch screens are used in many electronic devices to display graphics and text, and to provide a user interface through which a user may interact with the devices. A touch screen detects to contact on the touch screen. One or more operation may be trigger in response to the detection. The electronic device (1000) may display for example one or more soft keys, menus, icons, and other user-interface (UI) elements on the touch screen and trigger one or more operations associated with the UI elements for which a contact is detected.

A user may interact with the electronic device (1000) by contacting (e.g. with a finger, a stylus, etc) the touch screen at locations corresponding to the user-interface objects with which he wishes to interact. The contact with the touch sensitive display may be detected and the location (e.g. the position in a two dimensional coordinate system associated with the touch sensitive display) of the contact point may be determined using any appropriate sensing technology. The contact pressure (e.g. intensity of the contact pressure) with which the contact is performed may also be determined using any appropriate sensing technology.

Further, the user of the touch sensitive display may perform a gesture (also referred to herein as a "continuous gesture") while maintaining the contact with the touch sensitive display: in which case the trajectory (G) or displacement followed by the point of contact (also referred to herein as the contact point) with the touch sensitive display may be determined. One or more displacement parameters of this displacement may be determined such as displacement direction, displacement speed, displacement amount (e.g. distance between two locations of the contact point), etc. One or more pressure parameters of the contact point may be determined: pressure intensity, pressure change, pressure duration, etc.

One or more embodiments and aspects of a method for interacting with one or more software applications (S1, S2, S3) will now be described in more details. In the examples described herein, the electronic device (1000) is assumed to be a smartphone, but the present description is applicable to any type of electronic device including a touch sensitive display. Each of the software applications (S1, S2, S3) may be a standalone application, a web application, a client application, an operating system, a middleware or any other type of application.

It will be appreciated that although the present description provides examples of software applications that are distinct applications, no restrictions are placed on the software architecture of the electronic device for implementing the method for interacting with one or more software applications (S1, S2, S3) and / or the software links between the main application (1100) and the one or more software applications (S1, S2, S3). For example, in one or more embodiments, the main application (1100) is implemented as an autonomous executable software, distinct from the one or more of the software applications (S1, S2, S3), which are themselves autonomously executable software applications. In one or more embodiments, the main application (1100) and the one or more of the software applications (S1, S2, S3) are implemented as software modules of a same software application or as software modules / programs / sub-programs of a same software package.

FIGS. 2A and 2B illustrate several aspects of a method for interacting with one or more software applications (S1, S2, S3).

In one or more embodiments, the main application (1100) is configured to trigger the execution by one or more of the software applications (S1, S2, S3) of one or more operations. For example, the main application (1100) may be configured to send instructions to software applications (S1, S2, S3) to trigger the execution of the operation(s). The instructions may be sent directly to the software applications (S1, S2, S3) when the software applications are designed with interface(s) to receive commands. The instructions may be sent indirectly to the software applications (S1, S2, S3), e.g. through an operating system of the electronic device (1000), through a middleware or any hardware / software infrastructure suitable for transmitting instructions to the software applications (S1, S2, S3).

In one or more embodiments, the main application (1100) is configured to trigger the execution by one or more of the software applications (S1, S2, S3) of the one or more operations in dependence upon the gesture performed by a user on the touch sensitive display (1200), more precisely, in dependence upon intersections of the trajectory of this gesture with one or more icons displayed in a common user interface screen (CSC). The one or more icons displayed in a common user interface screen (CSC) thus enable interaction with the different software applications (S1, S2, S3) through the common user interface screen (CSC).

The icons displayed in the common user interface screen (CSC) are icons of a predetermined set of icons (1, 2, 3, 4; 21, 22, 23; 41, 42, 43; 421, 422, 423). In one or more embodiments, the display and update of the icons in the common user interface screen (CSC) is managed by the main application (1100).

In one or more embodiments, one or more intersection parameters of intersections of the trajectory of this gesture with one or more icons displayed in a common user interface screen (CSC) are determined and analyzed to determine whether one or more trigger conditions are fulfilled to trigger the execution by a software application (S1, S2, S3) of the one or more associated operations.

In one or more embodiments, one or more operation parameters of the one or more associated operations to be triggered for a detected intersection are determined in dependence upon one or more intersection parameters of the detected intersection.

In one or more embodiments, the main application (1100) is configured to perform icon update operations in a foreground plane of the common user interface screen (CSC). For example, the main application (1100) is configured to display or remove one or more icons of the set of icons in a foreground plane of the common user interface screen (CSC). For example, the main application (1100) is configured to change the position and / or appearance of one or more icons of the set of icons in the foreground plane of the common user interface screen (CSC).

In one or more embodiments, the icon update operations are performed in dependence upon the gesture performed by a user on the touch sensitive display (1200) and intersections of the trajectory of this gesture with one or more icons of a common user interface screen (CSC), and more precisely, in dependence upon intersections of the trajectory of this gesture with one or more icons displayed in a common user interface screen (CSC).

In one or more embodiments, one or more intersection parameters of the detected intersections of the trajectory of this gesture with one or more icons displayed in a common user interface screen (CSC) are analyzed to determine whether one or more trigger conditions are fulfilled to trigger the execution by the main application (1100) of the one or more icon update operations.

In one or more embodiments, same trigger conditions may be used for triggering both the execution by one or more of the software applications (S1, S2, S3) of one or more operations and the execution by the main application (1100) of one or more icon update operations.

FIG. 2A represents schematically a touch sensitive display (1200) of an electronic device (1000), represented as a smartphone. A start UI screen (SCO) is displayed on the touch sensitive display. The start UI screen (SCO) corresponds to UI screen from which the interaction with the touch sensitive display may begin. The start UI screen (SCO) may be any UI screen. The start UI screen (SCO) may comprise a foreground plane in which one or more UI elements are displayed and / or a background plane in which UI window(s) of one or more software applications are displayed.

The user may contact the touch sensitive display in any display area, for example in the display area (Z0) represented in FIG. 2A to initiate the interaction. In one or more embodiments, a contact with the touch sensitive display having a minimum duration is detected. In one or more embodiments, no minimum duration is required for initiating the interaction. In one or more embodiments, the location of the initial contact point with the touch sensitive display is determined.

In one or more embodiments, upon detection of a contact with the touch sensitive display (1200), the displayed UI screen is updated by switching from the start UI screen (SCO) to a common UI screen (CSC), as illustrated by FIG. 2B. In one or more embodiments, the control of the user interface is passed from a currently running application (e.g. the currently active application corresponding to the start UI screen (SC0)) to the main application (1100), upon detection of a contact with the touch sensitive display (1200). This corresponds to a change of execution context, i.e. a transition from the execution context of the currently active application to the execution context of the main application (1100). The execution of the currently running application may be interrupted upon this change of context or may continue as a background task.

In one or more embodiments, the common UI screen (CSC) comprises in a foreground plane one or more icons (1, 2, 3, 4) of a set of icons (1, 2, 3, 4; 21, 22, 23; 41, 42, 43; 421, 422, 423). In one or more embodiments, the icons (1, 2, 3, 4) are positioned around the location (Z0) of the contact point at the time of the detection of the initial contact with the touch sensitive display (1200). In one embodiment, the icons are positioned at a maximum distance of the location of the contact point at the time of the detection of the initial contact. This maximum distance may be determined in dependence upon an average finger diameter so as to reduce the necessary displacement of the user's finger to reach a display area of one of the icons (1, 2, 3, 4). In one or more embodiments, the common UI screen (CSC) comprises in a background plane a start UI window (W0). The start UI window may be any UI window of any software application.

The user may then perform a gesture, e.g. by moving his finger or a stylus along a trajectory (G) without interruption of the contact with the touch sensitive display. An example of trajectory (G) or displacement (G) followed by the point of contact is represented in FIG. 2B. In one or more embodiments, the intersection(s) of this trajectory (G) with the respective display areas of the displayed icons (1, 2, 3, 4) are determined.

The display area of an icon (1, 2, 3, 4) may be larger, smaller or have a different form compared to the visible shape representing the icon in the user interface. For example, the display area of a circular icon may be circular or squared, and may surround at a minimum distance the circular icon. In one or more embodiments, the display area of an icon is a detection zone in which an interaction (e.g. a contact with the touch sensitive display (1200)) with the icon may be implemented.

In one or more embodiments, each of the plurality of icons (1, 2, 3, 4) is associated with a software application (S1, S2, S3, S4). For example, an icon may be associated with one or more operations executable by the associated software application, e.g. with a function of the software application, etc. A software application (S1, S2, S3) may be associated with one or more icons of the set of icons, the associated icons may be displayed simultaneously or successively, e. g. in dependence upon the displacement of the contact point.

In one or more embodiments, the main application (1100) is configured to detect, during a displacement performed by the contact point without interruption of contact with the touch sensitive display, a temporal succession of intersections of the trajectory (G) of the contact point with a display area of a current icon (i.e. the currently intersected icon among the icon(s) currently displayed in the foreground plane) of the set of icons.

In one or more embodiments, the main application (1100) is configured to determine one or more intersection parameters for each detected intersection or at least one detected intersection. One or more intersection parameters may be determined at the time of the intersection (e.g. at the time of the entry/ output of the display area or during the displacement inside the display area of an icon). The intersection parameters may include:
- a type of intersection (e.g. whether the intersection is an entry into the display area of the current icon, an output out of the display area of the current icon or a displacement inside the display area of the current icon);
- a location on the touch sensitive display (1200) of the intersection point (i.e. of the contact point at the time of the intersection);
- one or more displacement parameters of the displacement of the contact point (e.g. displacement direction, displacement speed, displacement amount, etc);
- one or more pressure parameters of the contact with the touch sensitive display (e.g. pressure intensity, pressure change, pressure duration, etc); and / or
- a position with respect the graphical representation of the currently intersected icon (e.g. upper side, lower side, left side, right side, a specific graphical element of the displayed icon, etc).

In one or more embodiments, detection of intersections of the trajectory (G) with a display area of a current icon may comprises one or more of the following detections: detection of an entry into the display area of the current icon, detection of an output out of the display area of the current icon, detection of a displacement of the contact point inside the display area of the current icon. In one or more embodiments, no distinction is made between entry, output and displacement inside the display area of an icon: this is processed as a same and single intersection to determine whether one or more trigger conditions are fulfilled. In one or more embodiments, the detection of a displacement of the contact point inside the display area of the current icon may include the detection of a plurality of intersection points having corresponding intersection parameters: all intersection points or only a subset of the intersection points may be considered and analyzed to determine whether one or more trigger conditions are fulfilled.

In one or more embodiments, the main application (1100) is configured to update the foreground plane of the UI screen to display one or more icons or to render invisible (e.g. remove, hide), shadow or render partially transparent one or more currently displayed icons and / or to replace one or more icons with one or more replacement icons.

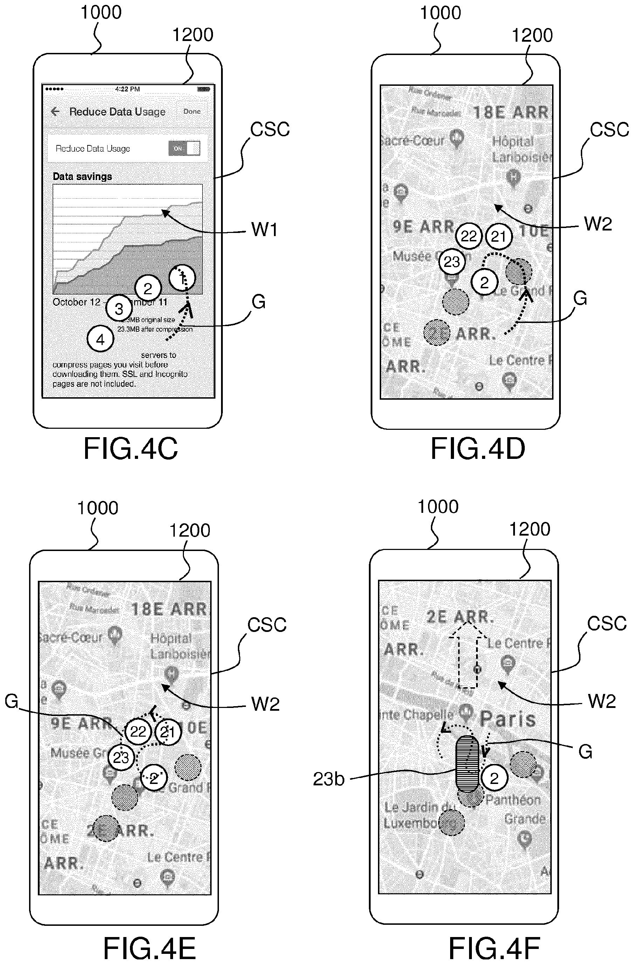

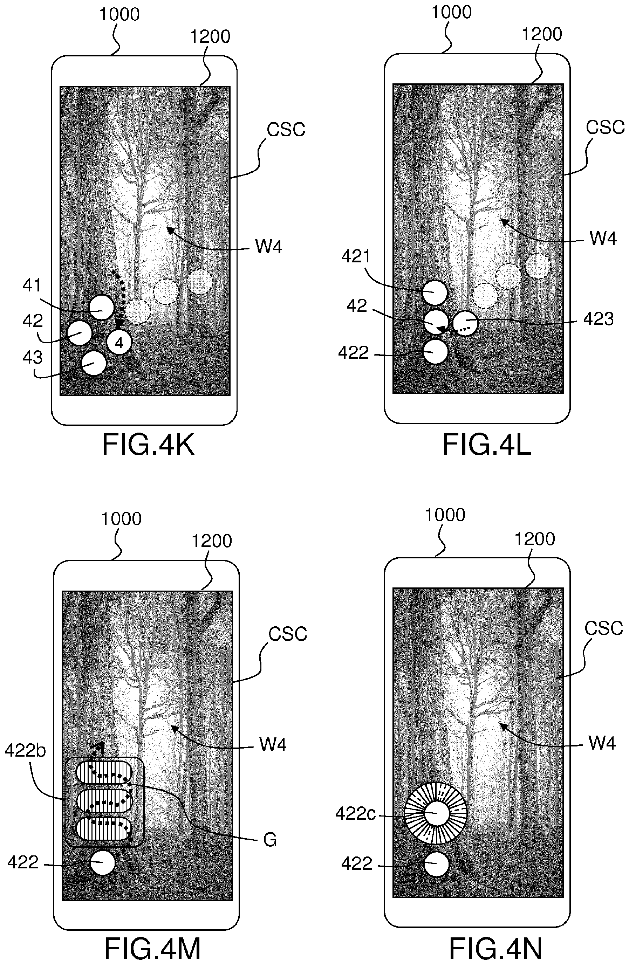

In one or more embodiments, the set of icons (1, 2, 3, 4; 21, 22, 23; 41, 42, 43; 421, 422, 423) is organized in a hierarchy of icons comprising at least two levels. For example the set of icons comprises a first plurality of icons of level N and at least one plurality of child icons of level N+1, wherein each plurality of child icons of level N+1 is associated with a parent icon of level N in the hierarchy of icons, with N=1, 2, 3... For example, the plurality of icons (1, 2, 3, 4) are icons of first level (N=1). For example, the plurality of child icons (21, 22, 23) of second level is associated the parent icon (2) of the plurality of icons (1, 2, 3, 4) of first level (see FIG. 4D described below). For example, the plurality of child icons (41, 42, 43) of second level is associated the parent icon (4) of the plurality of icons (1, 2, 3, 4) of first level (see FIG. 4K described below). For example, the plurality of child icons (421, 422, 423) of third level is associated with the parent icon (42) of second level (see FIG. 4L described below). Each icon may have any representation, for example including text and / or image(s) and / or graphics.

In one or more embodiments, the child icons of a parent icons are displayed in dependence upon the displacement of the contact point on the trajectory (G). In one or more embodiments, the main application (1100) is configured to display in the foreground plane of the first UI screen a first plurality of icons of level N and to display in the foreground plane of the first UI screen a second plurality of icons of level N+1 of the hierarchy of icons upon detection, during the displacement of the contact point, of an entry of the contact point into the display area of a parent icon of level N.

In one or more embodiments, the icons of the second plurality of icons of level N+1 are positioned around a display area of the parent icon of level N. For example, the icons of the second plurality of icons of level N+1 are positioned in such a manner that each icon of the second plurality of icons can be quickly reached by moving the user's finger. In one or more embodiments, the icons of the second plurality of icons are positioned at a maximum distance of the parent icon. This maximum distance may for example be determined in dependence upon an average finger diameter.

In one or more embodiments, the icons of level N other than the current parent icon may be rendered invisible (e.g. removed, hidden), shadowed or rendered partially transparent, upon detection during the displacement of the contact point of an entry of the contact point into the display area of the current parent icon of level N. This enables to save usable display space in the foreground plane of the first UI screen, for example as the icons of the second plurality of icons of level N+1 may be displayed, at least partially, over the display areas of the icons of level N.

In one or more embodiments, the main application (1100) is configured to remove (hide, render invisible) shadow or render partially transparent, in the foreground plane of the first UI screen, the second plurality of icons of level N+1 upon detection, during the displacement, of an entry of the contact point out of the display area of the parent icon (level N) of the second plurality of icons or of an icon of the same level N than the parent icon.. In one or more embodiments, the main application (1100) is configured to remove (hide, render invisible) shadow or render partially transparent in the foreground plane of the first UI screen the second plurality of icons upon detection, during the displacement, of an output of the contact point out of the display area of an icon of the second plurality of icons of level N+1 and / or a replacement icon of an icon of the second plurality of icons of level N+1.

In one or more embodiments, the main application (1100) is configured to trigger, upon detection, during the displacement performed by the contact point without interruption of contact with the touch sensitive display, of an intersection of the trajectory (G) followed by the contact point with a display area of a current icon (i.e. the currently intersected icon in the foreground plane) of the set of icons, the execution of one or more operation(s) associated with the current icon. The one or more triggered operation(s) may be executed by the software application (S1, S2, S3) associated with the current icon, by the main application (1100), by another software application or by an operating system of the electronic system. In the present document, the software application (S1, S2, S3) associated with the current icon is referred to as the "current" software application.

The trajectory (G) followed by the contact point may be any trajectory, and is chosen freely by the user in dependence upon the operation(s) the user wants to trigger. Further the locations of the icons (1, 2, 3, 4) of first level on the touch sensitive display are determined in dependence upon the location of the initial contact point: the user may thus decide on which part of the screen the user wants to display the icons that will enable him to interact with the software applications (S1, S2, S3).

In one or more embodiments, the one or more triggered operation(s) are identified in dependence upon the way the trajectory (G) intersects with a display area of the current icon: entry, output, inner displacement, etc. In one or more embodiments, the one or more triggered operation(s) are identified in dependence upon one or more intersection parameters of the corresponding detected intersection(s).

The one or more operations triggered upon detection of an intersection may for example include one or more of the following operations: opening a window of the associated software application, closing a window of the associated software application, switching between a current window and a window of the current application or vice-versa, storing an execution state of the associated software application, restoring an execution state of the associated software application, starting a recording of a media content (e.g. picture, video, audio content), interrupting the recording of a media content, execution of one or more functions of the associated software application, displaying a menu of the associated operation, adjusting a parameter of the associated software application, etc.

In one or more embodiments, the main application (1100) is configured to update one or more background plane(s) of the common UI screen (CSC) to provide feedback on the execution of the one or more operations associated with the current icon.

Updating a background plane may include: displaying in a background plane of the common UI screen (CSC) a UI window of the current software application, updating in a background plane of the common UI screen (CSC) the content of the UI window of the current software application, switching in the background plane of the common UI screen (CSC) from a UI window of the current software application to a next UI window, switching in the background plane of the common UI screen (CSC) from a previous window to a UI window of the current software application, etc.

In one or more embodiments, the main application (1100) is configured to trigger, upon detection, during the displacement of the contact point, of an entry of the contact point into of the display area of a current icon (1) the opening of a UI window (W1) of the current software application (S1) and to switch in the background plane of the common UI screen (CSC) from a previous UI window (e.g. currently displayed UI window) to the first UI window (W1).

In one or more embodiments, the main application (1100) is configured to trigger, upon detection during the displacement of the contact point, of an output of the contact point out of the display area of the current icon (1), the closing the first UI window (W1) of the current software application (S1) and to switch in the background plane of the common UI screen (CSC) from the first UI window (W1) to a next UI window.

In one or more embodiments, the switching from the previous UI window to the first UI window (W1) is performed by a sliding movement whose direction is determined as a function of a direction of the displacement of the contact point at the time of the entry of the contact point into the display area of the current icon (1). For example, the direction of the sliding movement is the direction of the displacement at the time of the entry of the contact point into the display area of the current icon (1).

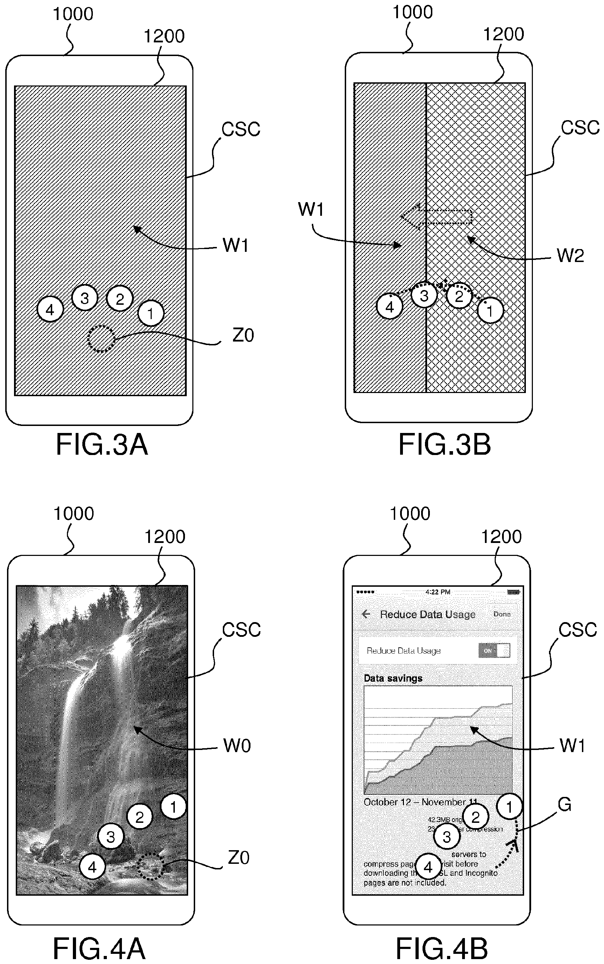

FIGS. 3A and 3B illustrate the example situation in which the user performed a gesture from the right hand side of the touch sensitive display (1200) to the left hand side: the trajectory enters successively in icons (1), (2), (3) and (4) on the right side of each icon. Upon entry into the first icon (1), a first UI window (W1) of a first software application (S1) associated with the first icon (1) is displayed. Upon entry into the second icon (2), a second UI window (W2) of a first software application (S2) associated with the first icon (1) is displayed in the background plane: the transition is performed by an horizontally sliding movement from right to left (see dotted line arrow in FIG. 3B), such that the second UI window (W2) replaces progressively the first UI window (W1). The same transition effect may be used for switching from the second UI window (W2) to the third UI window (W3) of a third application (S3) and from the third UI window (W3) to the fourth UI window (W4) of a fourth application (S4) so that the user has the impression that the foreground of the common UI screen (SCS) is sliding over the windows (in the background) of the different software applications. This sliding movement may be performed in any direction: vertically, horizontally, diagonally, or in any other direction defined in a two-dimensional space including the plane of touch sensitive display (1200). With this window switching process, the user feels as if the electronic device (1000) is positioned before a two-dimensional wall (in the plane of touch sensitive display (1200)) made of UI windows. This window switching process enables to switch between full size UI windows (e.g. without a need for iconifying each window) whatever the number of opened UI windows.

In one or more embodiments, the main application (1100) is configured to continuously trigger the execution by a software application (S1, S2, S3) of one or more operation(s) as long as the contact point remains into the display area of the current icon during the displacement performed by the contact point without interruption of the contact with the touch sensitive display. For example, the main application (1100) is configured to dynamically update the UI window (W1) of the current software application (S1) in the background plane of the common UI screen (CSC) with an updated content generated by the current software application (S1) as long as the contact point remains during the displacement into the display area of the current icon (1) and to interrupt the dynamically update upon detection, during the displacement, of an output of the contact point out of the display area of the current icon (1).

In one or more embodiments, when the icons are organized as a hierarchy of icons, the child icons of a parent icon in the hierarchy of icons enable to implement a corresponding hierarchy of operations of the software application associated with the parent icon. For example, a parent icon of first level is associated with the opening of a UI window of the associated software application, one or more icons of a first plurality of icons of second level are associated with a menu item of the associated software application, one or more icons of a second plurality of icons of third level are associated with a function of a menu item, one or more icons of a third plurality of icons of fourth level are associated with a parameter of a function of a menu item, etc. For example, a parent icon of first level is associated with the opening of a main UI window of the associated software application, one or more icons of a first plurality of icons of second level are associated with the opening of a sub-page or subwindow of the main UI window.

The hierarchy of operations of the software application corresponding to the child icons of a parent icon in the hierarchy of icons may correspond or not to a hierarchy existing in user interface of the software application: the icons in the foreground plane of the common UI screen (CSC) implement an additional user interface for interacting with the software application by the intermediate of the main application (1100) and this additional user interface is independent from the user interface of the software application. The operations and software applications associated with the different icons may thus be defined in dependence upon a desired type of interactions to be implemented between the software applications (S1, S2, S3, S4) through the main application (1100). For example, if the software application is a web application providing access to a plurality of web pages, one or more selected web pages or / and specific menus and / or specific functions may be directly accessed / activated and / or displayed using the common UI screen (CSC).

In one or more embodiments, if the contact with the touch sensitive display is interrupted, all icons in the foreground plane of the common UI screen (CSC) are removed and the control over the current software application is passed from the common UI screen (CSC) of the main application (1100) to the user interface of the current software application. As a consequence, the user may enter in the software application and interact with the software application using the user interface of this software application. In one or more embodiments, the execution state of the current software application is recorded by the main application (1100) upon interruption of the contact with the touch sensitive display (1200) and the UI window currently displayed in the background plane of the common UI screen (CSC) will be used to start interaction with the software application using directly the user interface of the software application and the associated actions (e.g scroll into the displayed content by a swipe on a web page, select by a tap an item on a web page, etc).

In one or more embodiments, the main application (1100) is configured to perform update operations in the foreground plane of the common UI screen (CSC) upon detection, during the displacement performed by the contact point without interruption of the contact with the touch sensitive display, of an intersection of the trajectory (G) followed by the contact point with a display area of a current icon of the set of icons.

In one or more embodiments, the one or more updates operation(s) are identified in dependence upon the way the trajectory (G) intersects with a display area of the current icon: entry, output, inner displacement, etc. In one or more embodiments, the one or more icon update operations operation(s) are identified in dependence upon one or more intersection parameters.

The update operation(s) of the foreground plane of the common UI screen (CSC) may include one or more icon update operations: displaying dependent icons (e.g child / parent icons, replacement icon) of the current icon, changing the appearance (e.g. color, form, size, etc) of the current icon or of one or more displayed icons, replacing the current icon or one or more displayed icons with one or more replacement icons having an appearance (e.g. color, form, size, etc) different from the replaced icons, hiding (e.g. removing, or at least shadowing or rendering the icons partially transparent) one or more displayed icons, etc.

The icon update operations may concern not only the currently intersected icon but also other currently displayed icons or other icon(s) of the set of icons. In one or more embodiments, the icons other than the current icon may be removed (e.g. rendered invisible, hidden, shadowed or rendered partially transparent) upon detection, during the displacement of the contact point, of an entry of the contact point into the display area of the current icon. This enables to save display space in the foreground plane of the first UI screen for other UI elements and / or to replace simultaneously the current icon with a bigger replacement icon, for example a zoomed icon or a replacement icon having a different shape, etc.

In one or more embodiments, the main application (1100) is configured to replace, in the foreground plane of the common UI screen (CSC), the current icon with a replacement icon having an appearance (e.g. color, form, size, etc) different from the current icon upon detection, during the displacement of the contact point, of an entry of the contact point into the display area of the current icon. The main application (1100) may further be configured to replace in the foreground plane the replacement icon with the current icon upon detection, during the displacement, of an output of the contact point out of a display area of the replacement icon. This enables to adapt the appearance of the current icon to the operation(s) to be triggered by means of the current icon and simultaneously to save display screen space by using larger icons only in case the user intends to use an icon by entering into the display area of the considered icon. The replacement icon may be positioned so that the center of the replacement icon falls at the location of the contact point at the time of the entry into the display area of the current icon or so that the center of the replacement icon and the current icon have the same location. The replacement icon may be positioned in the foreground plane of the UI screen in dependence upon the available free space on the touch sensitive display, and as close as possible from the location of the contact point at the time of the intersection with the current icon.

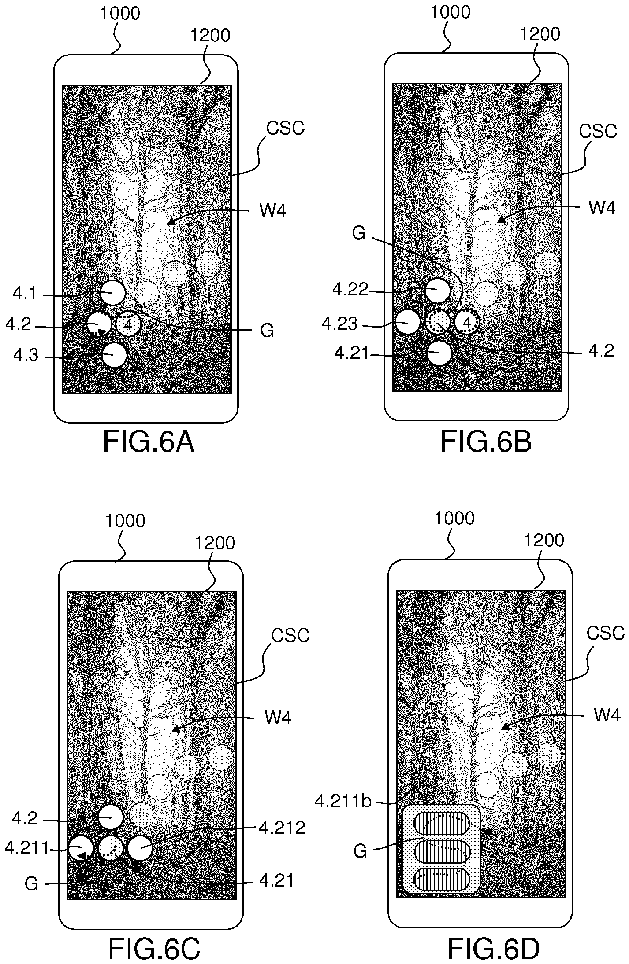

In one or more embodiments, the main application (1100) is configured to replace in the foreground plane the current icon with a group of icons upon detection, during the displacement of the contact point, of an entry of the contact point into the display area of the current icon. The group of icons may be represented as a container of icons (see for example FIG. 4M or FIG. 6D described below). In one embodiment, one or more icons of the group of icons are associated with an adjustable parameter of the current software application and the main application (1100) is further configured to trigger, for each considered icon of the group of icons, an adjustment by the current software application of a value of the associated adjustable parameter in dependence upon a one or more intersection parameter (e.g. a location, pressure parameter, displacement parameter and / or a position with respect the graphical representation of the currently intersected icon)of the intersection(s) with the display area of the concerned icon during the displacement of the contact point. In one or more embodiments, feedback on the execution of the adjustment is provided in a UI window of the current software application displayed in a background plane of the common UI screen (CSC). In one or more embodiments, the main application (1100) is configured to replace back the group of icons with the current icon upon detection, during the displacement, of an output of the contact point out of the display area of group of icon.

FIGS. 4A to 4N illustrate further aspects and example embodiments of a method for interacting with one or more software applications (S1, S2, S3). In FIGS. 4A to 4N, the common UI screen (CSC) is displayed on a touch sensitive display (1200) of an electronic device (1000). To simplify the figures, the common UI screen (CSC) covers completely the display area of the touch sensitive display (1200) but the common UI screen (CSC) may cover only a portion of the touch sensitive display (1200). Similarly, each UI windows (W0, W1, W2, W3, W4) in the background of the common UI screen (CSC) may cover completely the display area of the common UI screen (CSC) or cover only a portion of the display area of the common UI screen (CSC).

FIGS. 4A to 4N show a possible succession of states of the common UI screen (CSC) in dependence upon an example displacement of the contact point on a trajectory (G), wherein the whole displacement is performed without interruption of the contact with the touch sensitive display (1200). For example, the user of the electronic device (1000) is dragging his finger or a stylus on the touch sensitive display (1200) in a gesture following the trajectory (G) without interruption of the contact with the touch sensitive display (1200).

Referring to FIG. 4A, the common UI screen (CSC) comprises, in a foreground plane, four icons (1, 2, 3, 4) and in a background plane a start UI window (W0). The icons (1, 2, 3, 4) are positioned around the location (Z0) of the contact point at the time of the detection of the initial contact with the touch sensitive display (1200). The icons (1, 2, 3, 4) are assumed to be icons of first level in a hierarchy of icons.

Referring to FIG. 4B, the trajectory (G) of the contact point enters the display area of the current icon (1) and the UI screen is updated accordingly. In the example of FIG. 4B, the common UI screen (CSC) now comprises, in a foreground plane, the four icons (1, 2, 3, 4) and in a background plane a first UI window (W1) of a current software application (S1) associated with the current icon (1).

Referring to FIG. 4C, the trajectory (G) of the contact point goes out of the display area of the current icon (1). The background of the UI screen (SCS) may be updated by switching from the first UI window (W1) to the start UI window (W0) or maintaining the first UI window (W1). In the example of FIG. 4B, the common UI screen (CSC) now comprises, in a foreground plane, the four icons (1, 2, 3, 4) and in a background plane the first UI window (W1).

Referring to FIG. 4D, the trajectory (G) of the contact point enters the display area of the current icon (2) and the UI screen is updated accordingly. In the example of FIG. 4B, the common UI screen (CSC) comprises, in the foreground plane, the four icons (1, 2, 3, 4) of first level and three child icons (21, 22, 23) of second level and in a background plane a UI window (W2) of a current software application (S2) associated with the current icon (2). The three child icons (21, 22, 23) are disposed around the display area of the current parent icon (2). In one or more embodiments, the icons of first level (1, 3, 4) other than the current icon (2) may be removed (e.g. rendered invisible, hidden, shadowed or rendered partially transparent) to save usable display space in the foreground plane of the first UI screen.

Referring to FIG. 4E, the trajectory (G) of the contact point enters successively the display area of the icons (21), (22), and (23). In one example embodiment, the current software application (S2) is a web application (a map application for Paris, the capital of France in the example of FIG. 4E) and each of the icons (21), (22), and (23) may be associated with a menu, function or a sub-page) in a main web page of the current software application (S2). For example, if the currently intersected icon (21) or (22) is associated with a sub-page, the content of the UI window (W2) of the current software application (S2) in the background plane of the common UI screen (CSC) is replaced with the concerned sub-page associated with the currently intersected icon (21), (respectively (22)), upon entry of the trajectory (G) into the display area of the currently intersected icon (21), (respectively (22)). For example, if the currently intersected icon (21) or (22) is associated with a function, this function will be triggered upon entry of the trajectory (G) into the display area of the currently intersected icon (21), (respectively (22)).

Referring to FIG. 4F, upon detection of the entry of the trajectory (G) into the display area of the current icon (23), the current icon (23) is replaced in the foreground plane of the common UI screen (CSC), with a replacement icon (23b) having a shape different from the current icon (23). The other child icons (21), (22) of second level (other than the current icon (23)) may be removed (e.g. rendered invisible, hidden, shadowed or rendered partially transparent) to save usable display space in the foreground plane of the first UI screen. Both the replacement icon (23b) and the current icon are associated with a same software application (S2).

In one or more embodiments, the main application (1100) is configured to trigger an execution, by the current software application (S2) associated with the current icon (23) and the replacement icon (23b), of one or more operations in dependence upon one or more intersection parameters of intersection(s) detected during the displacement of the contact point inside a display area of the replacement icon (23b).

For example, the triggered operation(s) comprises the adjustment of a current value of the at least one adjustable parameter of the current software application in dependence upon one or more intersection parameters of intersection(s) detected with a display area of the replacement icon during the displacement of the contact point. In the example illustrated by FIG. 4F, the replacement icon (23b) has a rectangular shape with rounded corners and includes horizontal lines forming a one-dimensional (ID) adjustment scale for adjusting the corresponding adjustable parameter: the current value of the adjustable parameter may be determined as a function of the location, displacement amount or displacement speed, with respect to the vertical axis of the 1D adjustment scale, of the contact point in this 1D adjustment scale. The adjustable parameter may be for example, a scrolling parameter, a zoom parameter, a colorimetric parameter, a light or contrast parameter, a sound parameter (volume, balance, loudness, equalization, ...) etc. The replacement icon (23b) may form a two-dimensional (2D) adjustment scale for adjusting simultaneously two parameters, for example a couple of value (X,Y) defining a point of view or zooming point in a picture.

For example, the triggered operation(s) comprises changing dynamically a point of view on a content in the UI window (W2) of the current software application (S2) in the background plane of the common UI screen (CSC) in dependence upon one or more intersection parameters of intersection(s) detected during the displacement of the contact point inside a display area of the replacement icon (23b). Changing dynamically a point of view on a content in the UI window (W2) may include scrolling a content in the UI window (W2) of the current software application (S2) (e.g. scrolling in the content of a web page when the current software application (S2) is a web application), zooming a content in the UI window (W2) of the current software application (S2), changing a point of view in a 3D content, etc.

For example, the triggered operation(s) comprises selecting an item in a list of items displayed in the UI window (W2) of the current software application (S2) in the background plane of the first UI screen (SC2) in dependence upon a one or more intersection parameters of intersection(s) detected during the displacement of the contact point inside a display area of the replacement icon (23b). For example, the currently selected item of the list of items may be changed by changing the location, displacement amount or displacement speed, with respect to the vertical axis of the 1D adjustment scale of the replacement icon (23b), of the contact point in the 1D adjustment scale.

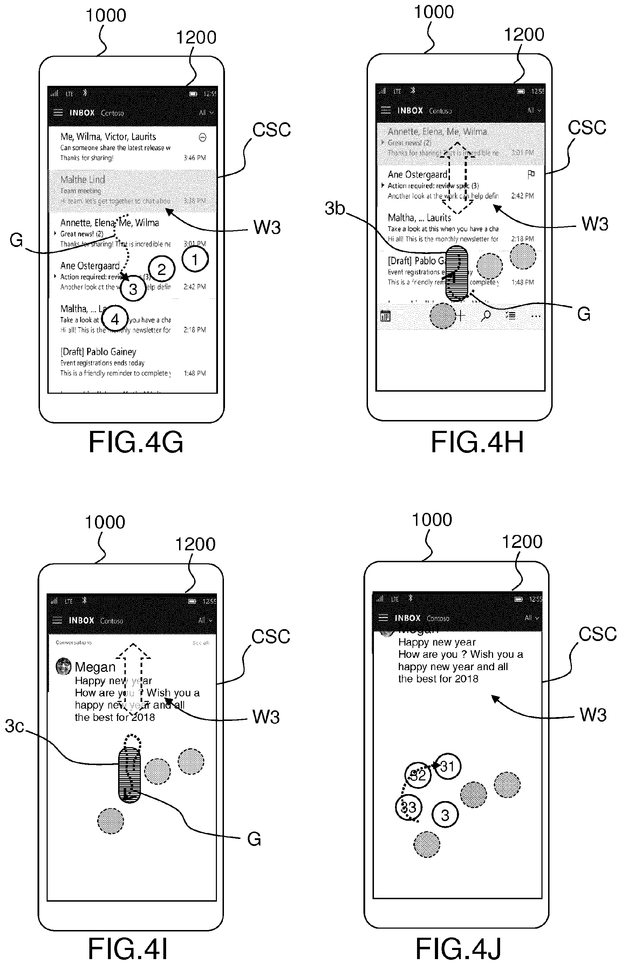

Referring to FIG. 4G, the trajectory (G) of the contact point has gone out of the display area of the replacement icon (23b), enters the display area of the currently intersected icon (3) and the common UI screen (CSC) is updated accordingly. In the example of FIG. 4G, the replacement icon (23b) is removed and the four icons (1, 2, 3, 4) of first level are displayed in the foreground plane of the common UI screen (CSC). Further, in the example of FIG. 4G, the common UI screen (CSC) comprises in a background plane a UI window (W3) of the current software application (S3) associated with the currently intersected icon (3).

Referring to FIG. 4H, upon detection of the entry of the trajectory (G) into the display area of the current icon (3), the current icon (3) is replaced in the foreground plane of the common UI screen (CSC), with a first replacement icon (3b) having a shape and size different from the current icon (3). The other icons (1), (2), (4) of the same level - other than the current icon (3) - may be removed (e.g. rendered invisible, hidden, shadowed or rendered partially transparent) to save usable display space in the foreground plane of the first UI screen. Both the first replacement icon (3b) and the current icon (3) are associated with a same current software application (S3).

In the example illustrated by FIG. 4H, the first replacement icon (3b) has a rectangular shape with rounded corners and includes horizontal lines forming a 1D adjustment scale for adjusting a corresponding adjustable parameter. The adjustable parameter may be for example, a scrolling parameter for scrolling in a list of items (for example, in a list of emails) presented into the UI window (W3) of the current software application (S3).

In one or more embodiments, the main application (1100) is configured to trigger an execution, by the current software application (S3) associated with the current icon (3) and the first replacement icon (3b), of one or more operations in dependence upon one or more intersection parameters of intersection(s) detected during the displacement of the contact point inside a display area of the first replacement icon (3b).

For example, the one or more operations may include scrolling in a list of items, i.e. changing the view on the list of items and / or the currently selected item in dependence upon the location, displacement direction, displacement amount and / or displacement speed in the 1D adjustment scale of the first replacement icon (3b).

For example, the one or more operations may include opening the currently selected item in a list of items upon detection of upon a one or more intersection parameters of intersection(s) detected during the displacement of the contact point inside a display area of the first replacement icon (3b). For example, opening the currently selected item may be performed upon detection of the output of the trajectory (G), through the left side or right side of the display area of the first replacement icon (3b) or upon detection of a contact pressure above a given threshold during the displacement of the contact point inside a display area of the first replacement icon (3b).

In one or more embodiments, upon detection of predetermined trigger conditions (e.g. contact pressure above a threshold in the display area of the first replacement icon (3b)), the scrolling in the list of items is interrupted, the currently selected item (e.g. email) is opened and the first replacement icon (3b) is replaced, in the foreground plane of the common UI screen (CSC), with a second replacement icon (3c) different from the current icon (3) as illustrated by FIG. 4I.

In the example of FIG. 4I, the replacement icon (3c) has a rectangular shape with rounded corners and includes horizontal lines forming an 1D adjustment scale for adjusting a corresponding adjustable parameter. The adjustable parameter may be for example, a scrolling parameter for scrolling in the content of the selected email which has been selected by means of the first replacement icon (3b).

In one or more embodiments, upon detection of predetermined trigger conditions (e.g. contact pressure above a threshold during the displacement in the display area of the second replacement icon (3b)), the scrolling in email is interrupted and a plurality of child icons (31, 32, 33) of the second replacement icon (3c) are displayed in the foreground plane of the common UI screen (CSC) as represented by FIG. 4J. Each icon of the plurality of child icons (31, 32, 33) of second level may be associated with one or more operations that may be performed by the current software application (S3) on the selected email: dictating a response email, forwarding the email, deleting the email, etc.

Similarly, for each icon of the plurality of child icons (31, 32, 33) of second level, child icons may be displayed upon detection of predetermined trigger conditions to trigger the execution by the current software application (S3) of additional operations: e.g. send the dictated response email, cancel the dictated response email.

In one or more embodiments, starting from the common UI screen of FIG. 4I, upon detection of the intersection of the trajectory (G), with the left side or right side (or respectively the upper / lower sides) of the display area of the second replacement icon (3c), the scrolling in the email content is interrupted, the currently selected email is closed and the second replacement icon (3c) is replaced back, in the foreground plane of the common UI screen (CSC), with the first replacement icon (3b) as illustrated by FIG. 4H. The user may then again scroll in the list of emails as previously described by reference to FIG. 4H.

In one or more embodiments, starting from the common UI screen of FIG. 4H, upon detection of the output of the trajectory (G), through the upper side or lower side of the display area of the first replacement icon (3b), the scrolling in the email list is interrupted, and the first replacement icon (3b) is replaced back, in the foreground plane of the common UI screen (CSC), with the current icon (3) as illustrated by FIG. 4G.

Referring to FIG. 4K, the trajectory (G) of the contact point enters the display area of the current icon (4) and the UI screen is updated accordingly. In the example of FIG. 4K, the common UI screen (CSC) comprises, in the foreground plane, the three child icons (41, 42, 43) of second level and in a background plane a UI window (W3) of a current software application (S3) associated with the current icon (4). The three child icons (41, 42, 43) are disposed around the display area of the current parent icon (4). In one or more embodiments, the other icons of first level (1, 2, 3) - other than the current icon (4) - may be rendered invisible removed (e.g. rendered invisible, hidden, shadowed or rendered partially transparent) to save usable display space in the foreground plane of the first UI screen.

Referring to FIG. 4L, the trajectory (G) of the contact point enters in the display area of the current child icon (42) and the first UI screen is updated accordingly. In the example of FIG. 4L, the common UI screen (CSC) comprises, in the foreground plane, the three child icons (421, 422, 423) of third level and in a background plane a UI window (W3) of a current software application (S3) associated with the current parent icon (42). The three child icons (421, 422, 423) are disposed around the display area of the current parent icon (42).

Referring to FIG. 4M, starting with the common UI screen (SCS) of FIG. 4L, upon detection of the entry of the trajectory (G) into the display area of the current icon (422), the current icon (422) is replaced in the foreground plane of the common UI screen (CSC), with a group of replacement icons including 3 icons (422a, 422b, 422c). In the example of FIG. 4M, the group of replacement icons (422a, 422b, 422c) is represented as a container of icons. In one or more embodiments, the other icons of third level (421, 423) - other than the current icon (422) - may be removed (e.g. rendered invisible, hidden, shadowed or rendered partially transparent)to save usable display space in the foreground plane of the first UI screen.

In the example of FIG. 4M, each replacement icon (422a, 422b, 422c) has a rectangular shape with rounded corners and includes vertical lines forming an 1D adjustment scale for adjusting a corresponding adjustable parameter. Displaying simultaneously a group of icons is helpful in a situation where several parameters have to be adjusted in dependence one with the others. This may be the case for adjusting the color properties of an image, where parameters such as light, contrast and color saturation may need to be adjusted. In one or more embodiments, the group of icons is replaced back with the current icon (422) upon detection, during the displacement, of an output of the contact point out of the display area of group of icon: thus all the icons of the group of icons appear and disappear simultaneously, even when the trajectory of the contact point is in one icon of the group of replacement icons.

Referring to FIG. 4N, starting with the common UI screen (CSC) of FIG. 4L, upon detection of the entry of the trajectory (G) into the display area of the current icon (422), the current icon (422) is replaced in the foreground plane of the common UI screen (CSC), with a replacement icon (422b). In one or more embodiments, the other icons of third level (421, 423) - other than the current icon (422) - may be removed (e.g. rendered invisible, hidden, shadowed or rendered partially transparent) to save usable display space in the foreground plane of the first UI screen. In the example of FIG. 4N, the replacement icon (422b) has a circular shape forming a 2D adjustment scale for adjusting a corresponding adjustable parameter. This kind of 2D adjustment scale may be useful for adjusting the color (for example using a color wheel), for controlling a displacement for example of an item displayed in a plane, to define angle values (for example, rotating a 3D camera around a point of interest), etc.

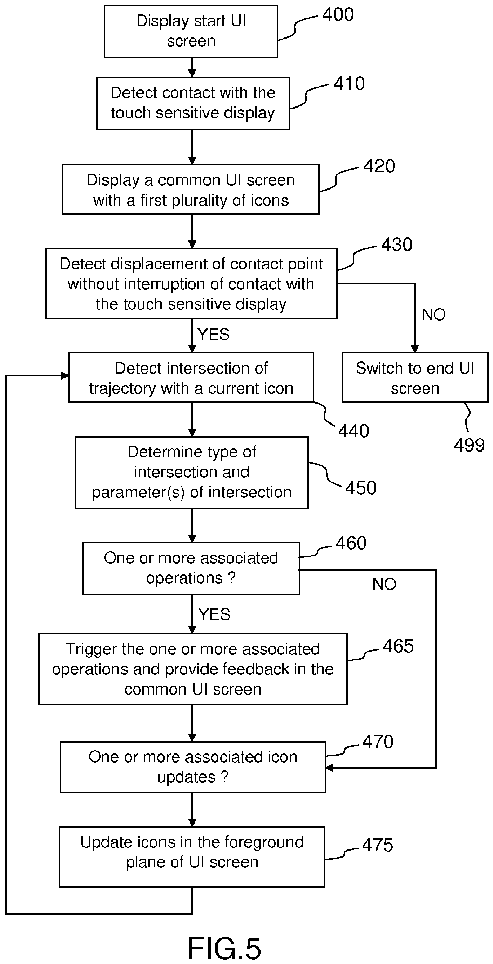

FIG. 5 represents a flow chart of a method for interacting with one or more software applications (S1, S2, S3) according to an example of the present description. While the various steps in the flowchart are presented and described sequentially, the man skill in the art will appreciate that some or all of the steps may be executed in different orders, may be combined or omitted, and some or all of the steps may be executed in parallel. The method steps may be implemented by the main application (1100) (that may be one software application among the one or more software applications (S1, S2, S3)) of the electronic device (1000).

In step 400, a start UI screen (SCO) is displayed on the touch sensitive display (1200). The start UI screen may be include any UI window. The start UI screen may for example include a start UI window of a first application of the plurality of software applications (S1, S2, S3).

In step 410, a contact with the touch sensitive display (1200) is detected. In one or more embodiments, the contact is detected in the display area of the start UI screen. The location of the contact point is determined at the time of the detection of the contact.

In step 420, the content displayed in touch sensitive display (1200) is updated screen upon detection of the contact with the touch sensitive display (1200) by displaying a common UI screen (CSC). The common UI screen (CSC) may cover partially or totally the touch sensitive display (1200). The common UI screen (CSC) comprises, in a foreground plane, a first plurality of icons (1, 2, 3, 4) of a set of icons of the common UI screen (CSC). In one or more embodiments, the icons of first plurality of icons (1, 2, 3, 4) are positioned around a location of the contact point at the time of the detection of the contact. Each of the plurality of icon is associated with a software application among a plurality of software applications.

In step 430, a displacement of the contact point is detected, wherein this displacement is performed without interruption of contact with the touch sensitive display. Step 430 may be executed in parallel with the other method steps to guaranty that the contact with the touch sensitive display is not interrupted during the execution of steps 440 to 475. If the contact with the touch sensitive display is interrupted, final step 499 is executed.

In step 440, a temporal succession of intersection(s) of the trajectory (G) followed by the contact point with the display area of the icons currently displayed in the foreground plane of the UI screen are determined. For example, one or more intersections with a display area of a current icon (i.e. the currently intersected icon) currently displayed in the foreground plane of the UI screen may be detected. The temporal succession of intersection(s) will be use convert the single gesture, performed by the user, into a complex succession of operations, including interaction with one or more software applications of the plurality of software applications (S1, S2, S3) and / or UI update operations. For example, for each detected intersection, an interaction with the software application associated with the current icon (i.e. the current software application) may be triggered. Step 440 may be executed in parallel with the other method steps 450-475 to detect further intersections with the icons currently displayed in the foreground plane.

In step 450, one or more intersection parameters are determined. For example, the type of intersection is determined, i.e. it is determined whether the intersection is an entry into the display area of the current icon, an output out of the display area of the current icon or a displacement inside the display area of the current icon. For example a location, one or more pressure parameters and / one or more displacement parameters at the time of the intersection is (are) determined. For a displacement inside the display area of the current icon, only intersection points of interest may be considered for the execution of step 460 and 470. For example, the intersection points on the trajectory (G) may be sampled or otherwise filtered and corresponding intersection parameters may be calculated only for the sampled intersection points. For example, when the icon is a 1D or 2D scale for adjusting a parameter, only intersection points falling on a line of the grid of the 1D or 2D scale (e.g. corresponding to a change of parameter value) may be considered for the execution of steps 460 and 470.

For each detected intersection, steps 460 and 470 may be performed to determine whether one or more trigger conditions are fulfilled for triggering in step 465 the execution by the current software application of one or more operations and / or for triggering in step 475 the execution by the main application (1100) of one or more icon update operations.

In step 460, it is determined whether there is one or more operations of a software application associated with the current icon and the detected intersection. This determination includes determining whether one or more operations of the current software application (i.e. the software application associated with the current icon) are associated with the current icon and with the detected intersection (e.g. for the detected intersection and the intersection parameters determined in step 450). If the answer is yes, step 465 is executed. Otherwise step 470 is executed. In one or more embodiments, it is determined whether trigger conditions are defined for one or more operations associated with the currently intersected icon. If trigger conditions are defined, it is determined whether all trigger conditions are fulfilled before triggering in step 465 the execution of one or more operations.

In step 465, if it is determined that there is one or more operations associated with the current icon and the detected intersection, the execution by the current software application of the considered one or more operations is triggered upon detection of the considered intersection. In one or more embodiments, the one or more operations are triggered only if all the trigger conditions associated with the one or more operations are fulfilled for the detected intersection. In one or more embodiments, no trigger conditions are defined for the one or more operations associated with a current icon and the main application (1100) triggers the execution of the one or more operations upon detection of an intersection with this current icon, i.e. whatever the intersection parameters of the detected intersection and without testing any trigger condition..

In one or more embodiments, intersection parameters (e.g. the type of intersection, displacement parameters, and / or pressure parameters) determined during step 460 may be used to determine how to execute the one or more operations (e.g. to determine one or more operation parameters of the one or more operations to be executed). In one or more embodiments, the UI screen is updated to provide feedback on the one or more triggered operations in a UI window of the current software application displayed in a background plane of the common UI screen (CSC). In one or more embodiments, the appearance of the current icon is updated to provide additional feedback. Embodiments described by reference to FIGS. 2A-2B, 3A-3B, 4A-4N, 6A-6N may be implemented for triggering the one or more operations associated with a current icon and updating the UI screen to provide feedback on the execution of the one or more operations.

In step 470, it is determined whether there is one or more icon update operations associated with the current icon and the detected intersection. An icon update operation may comprise an update of one or more icon(s) in the foreground plane of the common UI screen (SC1). This determination includes determining whether one or more icon update operations are associated with the current icon and the detected intersection (e.g. with the type of the detected intersection and / or with the intersection parameters). An icon update may for example be performed whenever there is one or more dependent icons for the current icon. The dependent icons of a current icon may include: one or more child icons, one or more replacement icons, a group of replacement icons, a parent icon. If the answer is yes, step 475 is executed. Otherwise, step 440 is executed again with the icons currently displayed (e.g. currently visible) in the foreground plane of the UI screen. In one or more embodiments, it is determined in step 470 whether trigger conditions are defined for one or more icon update operations associated with the currently intersected icon. If trigger conditions are defined, it is determined whether all the trigger conditions are fulfilled before triggering in step 475 the execution of one or more icon update operations.

In step 475, if it is determined that there is one or more icon update operations associated with the current icon and the detected intersection, the execution of the one or more icon update operations are triggered upon detection of the considered intersection. In one or more embodiments, the one or more icon update operations are triggered only if all the trigger conditions associated with the one or more icon update operations are fulfilled for the detected intersection. In one or more embodiments, no trigger conditions are defined for the one or more icon update operations associated with a current icon and the main application (1100) triggers the execution of the one or more icon update operations upon detection of an intersection with this current icon, i.e. whatever the intersection parameters of the detected intersection and without testing any trigger condition. Step 440 may be performed again after step 475.

The icon update operations may concern one or more dependent icons of the current icon. The one or more icon update operations may include: hiding (e.g. remove, shadow or render partially transparent) one or more currently displayed icons, replacing one or more icons with one or more replacement icons, changing the appearance of one or more icons, displaying one or more child icons of the current icon, displaying a parent icon, etc. Embodiments described by reference to FIGS. 2A-2B, 3A-3B, 4A-4N, 6A-6N may be implemented for the icon update operations. Step 440 is executed after step 475 with the icons currently displayed (e.g. currently visible) in the foreground plane of the UI screen.

In step 499, the main application (1100) is configured to update the common UI screen (CSC) and / or to trigger the execution of one or more final operations when the contact with the touch sensitive display (1200) is interrupted, at the end of the displacement of the contact point. In one or more embodiments, all icons currently displayed in the foreground plane may be removed. In one or more embodiment, the main application (1100) is configured to store (e.g. in a register of the operating system of the device (1000)) an execution state of the current software application upon interruption of the contact with the touch sensitive display (1200).

In one or more embodiment, the main application (1100) is configured to remove all icons displayed in the foreground plane and to pass control of the user interface to the current software application. This corresponds to a change of execution context, i.e. a transition from the execution context of the main software application to the execution context of the current software application. For example, a UI window of the current software application may be opened and the execution state of the current software application be restored on the basis of an execution state recorded by the main application (1100). The user will then be able to interact with the current software application using the user interface of the current software application instead of the common UI screen (CSC).

In one or more embodiment, the main application (1100) is configured to switch back to the start UI screen SC0 currently displayed in step 400 when the user initially contacts the touch sensitive display (1200) to start the gesture.

FIGS. 6A to 6N show a possible succession of states of the common UI screen (CSC) in dependence upon an example displacement of the contact point on a trajectory (G), wherein the whole displacement is performed without interruption of the contact with the touch sensitive display (1200). The icons and associated operations are given here for illustration purposes and discloses additional embodiments for the trigger operations and / or the trigger conditions. These additional embodiments may be combined or substituted to embodiments disclosed by reference to FIGS. 2A-2B, 3A-3B, 4A-4N, 6A-6N.

As illustrated by FIG. 6A, the common UI screen of FIG. 6A comprises, in a UI window (W4) in the background plane..

Starting with the common UI screen of FIG. 6A, the following operations are performed upon entry of the contact point into the display area of icon (4): displaying of an application content, the application being a camera application and the content being a camera app live flow; and displaying sub icons (4.1; 4.2; 4.3) corresponding to the following operations: recording a video (icon 4.1); taking a photo (icon 4.2); switching between the back camera and the front camera (icon 4.3).

As illustrated by FIG. 6A, upon entry into the display area of icon (4.2) a photo is taken and displayed in the window (W4) in the background plane.

As illustrated by FIG. 6B, the user may performed a gesture that goes back and forth between sub icon (4.2) (i.e. take photo) and icon (4), to cancel the taken photo and display again the live flow in the window (P). Upon entry into the display area of icon (42), a photo is taken and displayed in the window (P) and sub-icons (4.21 4.22 4.23) are displayed: icon (4.21) for photo tuning, icon (4.22) for adding a comment, icon (4.23) for sending/sharing the taken photo. The photo may then used as a topic media content with which a contribution media content (e.g. annotation or comment of the topic media content) would be combined.

As illustrated by FIG. 6C, upon entry into the display area of icon (4.21), sub icons (4.211; 4.212) are displayed: icon (4.211) for example for RGB tuning of the photo; icon (4.212) is a chromatic wheel for colorimetric adjustment or for spotlight position adjustment on a picture.

As illustrated by FIG. 6D, upon entry into the display area of icon (4.211), this current icon is replaced by a container (4.21 1b) of three icons corresponding to three parameters for setting up RBG channels of the taken photo.

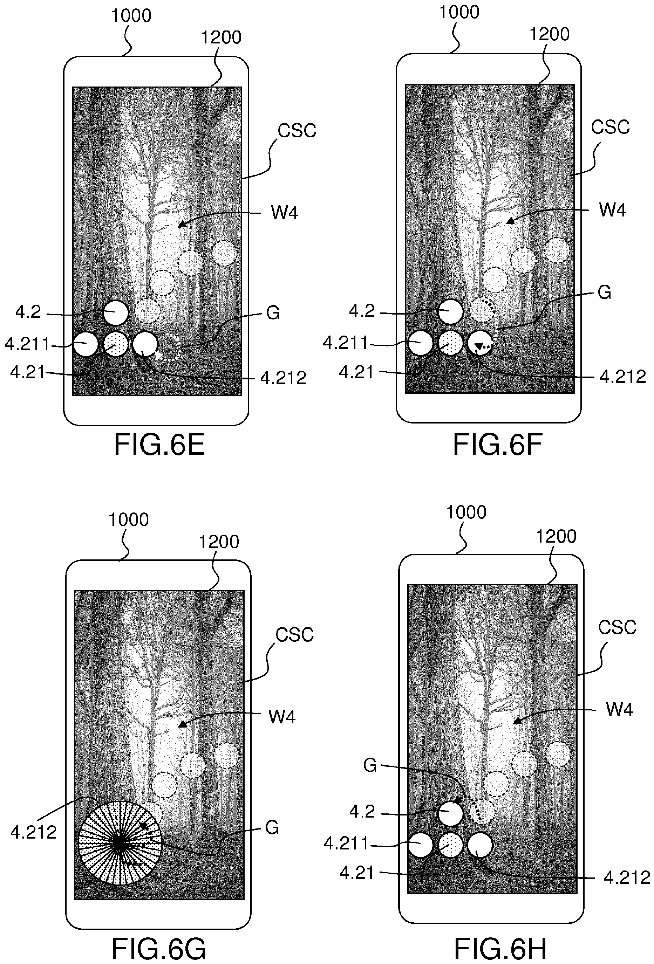

As illustrated by FIG. 6E, upon leaving the display area of icon (4.211b) the chosen RGB values are stored and initial sub icons (4.21; 4.211; 4.212) are displayed again.

As illustrated by FIGS. 6F and 6G, upon crossing the display area of icon (4.212), this current icon is replaced by a 2D wheel (4.212), for chromatic adjustment or spotlight position on a picture.

As illustrated by FIG. 6H, upon detection of a contact pressure above a predetermined threshold, the value adjusted by the 2D wheel (4.212) is stored and applied to the taken photo and sub icons (4.21; 4.211; 4.212) are displayed again.

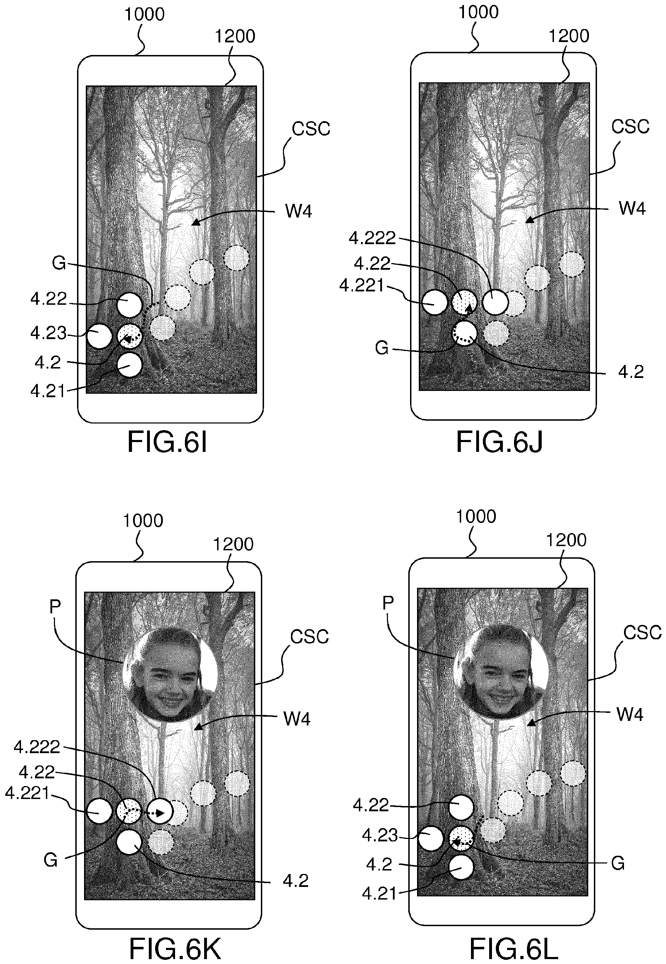

As illustrated by FIG. 6I, upon crossing the display area of sub icon (4.2), sub-icons (4.21 4.22 4.23) are displayed again.

As illustrated by FIG. 6J, upon crossing the display area of sub icon (4.22), sub-icons (4.221; 4.222) are displayed: icon (4.221) for recording a text comment to be used as contribution media content and icon (4.222) for recording a video comment to be used as contribution media content.

As illustrated by FIG. 6K, upon crossing the display area of sub icon (4.222), a window (P) is displayed over the UI window (W4) to show the live flow of the front camera and a video is acquired by the camera. The acquired video is stored and used as a contribution media content for the topic media content. The UI window (W4) in the background plane is updated by showing the topic media content combined with the contribution media content: the acquired video is shown on overlay over the topic media content (i.e. the taken photo).

As illustrated by FIG. 6L, upon output out of the display area of sub icon (4.222), the video record is stopped and the sub-icons (4.21 4.22 4.23) are displayed again.

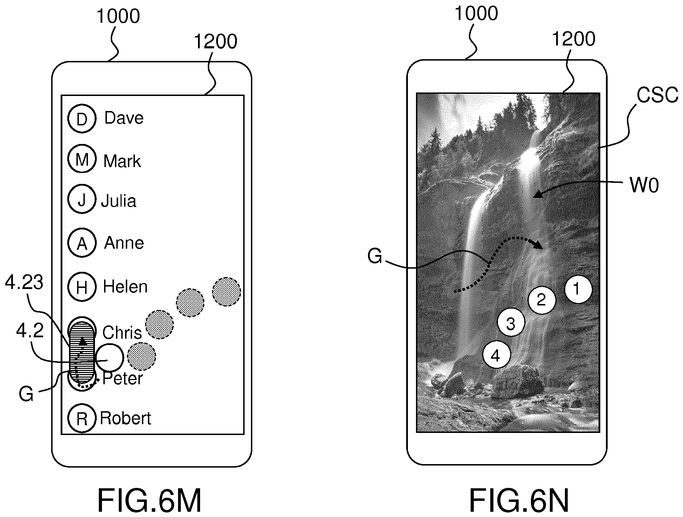

As illustrated by FIG. 6M, upon crossing the display area of sub icon (4.23), a contact list is displayed in the background and the sub icon (4.23) is replaced by a replacement icon (4.23) configured to allow the user to scroll inside the contact list.

Upon detection of a contact pressure above a predetermined threshold, a contact is selected in the contact list and to send the topic media content and the contribution media content to the selected contact.

As illustrated by FIG. 6N, the foreground common UI screen is updated to display only the icons of first level (1; 2; 3; 4).

Thanks to the method for interacting with one or more software applications described herein a single gesture, performed by a user without interrupting the contact with the touch display device, can be converted into a complex succession of interactions with one or more software applications and / or associated user interface updates. This enable to guide the user for performing any kind of operations implying several software applications in a quick and efficient manner. This succession of operations may be performed while holding the phone with one hand and performing the continuous gesture on the touch sensitive display with only one thumb, i.e. the thumb of the same hand.

The method may be implemented by a main application (1100) configured to manage the common UI screen (CSC). The method may be used for implementing interactions between this main application (1100) and other, distinct and independent, software applications (S1, S2, S3). The main application (1100) may be for example be a dedicated application for generating and sharing a contribution media content, forming an annotation of a topic media content, generated by one of the other software applications.

## Claims

1. A method for interacting with one or more software applications (S1, S2, S3) using a touch sensitive display, comprising:
displaying (420), upon detection of a contact at a contact point of the touch sensitive display, a common UI screen for interacting with said one or more software applications (S1, S2, S3), wherein the common screen comprises in foreground plane a first plurality of icons (1, 2, 3, 4) of a set of icons, wherein each icon of the set of icons is associated with a software application of said one or more software applications (S1, S2, S3), wherein the icons of first plurality of icons (1, 2, 3, 4) are positioned around a location of the contact point at the time of the detection of the contact;
detecting (430) a displacement of the contact point without interruption of said contact with the touch sensitive display, wherein said displacement is performed along a trajectory (G);
detecting (440), during said displacement, a temporal succession of intersections of the trajectory (G) with a display area of one or more icons displayed in the foreground plane;
for each intersection that is associated with one or more first operations of a first software application associated with a currently intersected icon (1), triggering (465) upon detection of the considered intersection an execution by said first software application of said one or more first operations and providing feedback on the execution of the one or more first operations in a first UI window (W1) of the first software application (S1) in one or more background planes of the common UI screen (CSC).

2. A method according to claim 1, further comprising
for each intersection that is associated with one or more icon update operations and with a currently intersected icon (1), performing (475) said one or more icon update operations in the foreground plane of the common UI screen (CSC) upon detection of the considered intersection.

3. A method according to claim 1 or 2, wherein one or more triggering conditions are defined for the first one or more operations of the first software application associated with a first currently intersected icon, the method further comprising,
determining one or more first intersection parameters of one or more intersections of said trajectory (G) with a display area of the first currently intersected icon;
determining whether said one or more triggering conditions are fulfilled on the basis of the one or more first intersection parameters;
wherein said triggering is performed only if said triggering conditions are fulfilled.

4. A method according to claim any of the preceding claims, further comprising,
determining one or more second intersection parameters of one or more intersections of said trajectory (G) with a display area of a second currently intersected icon;
wherein said one or more first operations are performed in dependence upon said one or more second intersection parameters.

5. A method according to any of the preceding claims,
wherein performing (475) said one or more icon update operations comprises at least one of displaying in the foreground plane a second plurality of icons, hiding one or more icons in the foreground plane, changing the appearance of one or more icons and replacing one or more icons in the foreground plane by one or more replacement icons.

6. A method according to any of the preceding claims, wherein the set of icons is organized in a hierarchy of icons comprising at least two levels, the method further comprising
displaying in the foreground plane of the common UI screen (CSC) a second plurality of icons (21, 22, 23) of level N+1 of icons upon detection, during said displacement, of an entry of the contact point into the display area of a parent icon (2) of level N, wherein the icons of the second plurality are positioned around a display area of the parent icon.

7. A method according to claim 6, further comprising
removing in the foreground plane of the common UI screen (CSC) the second plurality of icons upon detection, during said displacement, of an output of the contact point out of the display area of the parent icon.

8. A method according to any of the preceding claims, further comprising,
triggering an execution by the first software application (S1) of at least one first operation upon detection, during said displacement, of an entry of the contact point into a display area of a first currently intersection icon (1), said at least one first operation comprising opening the first UI window (W1) of the first software application (S1); and
switching in a background plane of the common UI screen (CSC) from a previous UI window to the first UI window (W1).

9. A method according to claim 8, wherein switching from the previous UI window to the first UI window (W1) is performed by a sliding movement whose direction is determined as a function of a direction of said displacement at the time of said entry of the contact point into said display area of the first currently intersection icon (1).

10. A method according to any of the preceding claims, further comprising,
triggering an execution by the first software application (S1) of at least one second operation upon detection, during said displacement, of an output of the contact point out of the display area of a second currently intersected icon (1), said at least one second operation comprising closing the first UI window (W1) of the first software application (S1); and
switching in the background plane of the common UI screen (CSC) from the first UI window (W1) to a next UI window.

11. A method according to claim 10, wherein said at least one second operation comprises storing in a memory information on a current execution state of the first software application (S1) at the time of said output of the contact point out of the display area of the first currently intersected icon (1).

12. A method according to any of the preceding claims, further comprising,
dynamically updating the first UI window (W1) of the first software application (S1) in the background plane of the common UI screen (CSC) with an updated content generated by the first software application (S1) as long as the contact point remains during said displacement into the display area of a third currently intersected icon (1); and
interrupting said dynamically updating upon detection, during said displacement, of an output of the contact point out of the display area of the third currently intersected icon (1).

13. A method according to any of the preceding claims, further comprising for a fifth currently intersected icon (21) of the set of icons and an associated second software application (S2) of said one or more software applications (S1, S2),
replacing in the foreground plane the fifth currently intersected icon (21) with a replacement icon (21b) having a shape different from the fifth currently intersected (21) upon detection, during said displacement, of an entry of the contact point into the display area of the fifth currently intersected icon (21);
determining one or more third intersection parameters of one or more intersections of said trajectory (G) with a display area of the replacement icon (21b);
triggering an execution of at least one third operation in dependence upon said one or more third intersection parameters;
displaying in a background plane of the common UI screen (CSC) a UI window of the second software application (S2) to provide feedback on the execution of said at least one third operation;
replacing in the foreground plane the replacement icon (21b) with the fifth currently intersected icon (21) upon detection, during said displacement, of an output of the contact point out of a display area of the replacement icon (21b).

14. A method according to claim 13,
wherein the replacement icon (21b) is associated with at least one adjustable parameter of the second software application (S2); and
wherein said at least one third operation comprises adjusting a current value of said at least one adjustable parameter in dependence upon said one or more third intersection parameters.

15. A method according to claim 13,
wherein said at least one third operation further comprises dynamically changing a point of view on a content in the UI window (W2) of the second software application (S2) in the background plane of the common UI screen (CSC) in dependence upon said one or more third intersection parameters.

16. A method according to claim 13,
wherein said at least one third operation further comprises selecting an item in a list of items displayed in the UI window (W2) of the second software application (S2) in the background plane of the common UI screen (CSC) in dependence upon said one or more third intersection parameters.

17. A method according to any of the preceding claims, further comprising for a sixth currently intersected icon (422) of the set of icons and an associated third software application (S3) of said one or more software applications (S1, S2, S3),
replacing in the foreground plane the sixth currently intersected icon (422) with a group of replacement icons (422a, 422b, 422c) upon detection, during said displacement, of an entry of the contact point into the display area of the sixth currently intersected icon (422), wherein each replacement icon of the group of replacement icons (422a, 422b, 422c) is associated with an adjustable parameter of the third software application (S3);
determining one or more third intersection parameters of one or more intersections of said trajectory (G) with a display area for each replacement icon of the group of replacement icons;
triggering, for each replacement icon of the group of replacement icons, an adjustment by the third software application (S3) of a value of the associated adjustable parameter in dependence upon the one or more third intersection parameters determined for the concerned replacement icon;
displaying in a background plane of the common UI screen (CSC) a UI window of the third software application (S3) to provide feedback on the execution of said adjustment; and
replacing in the foreground plane the group of replacement icons (422a, 422b, 422c) with the sixth currently intersected icon (422) upon detection, during said displacement, of an output of the contact point out of the display area of group of replacement icons (422a, 422b, 422c).

18. A method according to any of claims 3 to 17, wherein the one or more first, respectively second, third, intersection parameters include at least one parameter from the group consisting of: a type of intersection, a location on the touch sensitive display (1200) of the contact point, a displacement parameter of the displacement of the contact point, a pressure parameter of said contact with the touch sensitive display (1200), a position with respect the graphical representation of the concerned currently intersected icon.

19. An electronic device (1000), comprising
a touch sensitive display (1200);
a processor (1010);
a memory (1012) operatively coupled to the processor, said memory comprising computer readable instructions which, when executed by the processor, cause the processor to carry out the steps of the method according to any of the preceding claims.

20. A computer program product comprising computer readable instructions which, when executed by a computer, cause the computer to carry out the steps of the method according to any of claims 1 to 18.
